# EUROPEAN PATENT APPLICATION

(11) **EP 3 196 077 A1**
(43) Date of publication of application: **26.07.2017**
(21) Application number: 15842448.1
(22) Date of filing: 08.09.2015
(51) Int. Cl.: B60R 1/00, B60R 1/04, B60R 11/02, B60R 11/04

(54) **ELECTRONIC MIRROR DEVICE**

(30) Priority: 17.09.2014 JP 2014188953
(71) Applicant: Panasonic Intellectual Property Management Co., Ltd., Osaka-shi, Osaka 570-6207 (JP)
(72) Inventor: NAKAI, Wataru, Osaka-shi, Osaka 540-6207 (JP)
(74) Representative: Schwabe - Sandmair - Marx
(86) International application number: PCT/JP2015/004543
(87) International publication number: WO 2016/042733

(57) **Abstract**

The electronic mirror device performs display by switching between an image captured by a rear camera which is mounted on a rear part of a vehicle and captures an image of an area behind the vehicle, and an image captured by a mirror camera which is mounted near a position where a rearview mirror is mounted and captures an image of an area behind the vehicle. This electronic mirror device includes an image display unit that performs display by switching between an image captured by the rear camera and an image captured by the mirror camera, and a controller that controls the image display unit. The controller switches the display on the image display unit between the image captured by the rear camera and the image captured by the mirror camera, when an image of an object of interest captured by the rear camera coincides with an image of the object of interest captured by the mirror camera.

## Description

### TECHNICAL FIELD

The present invention relates to an electronic mirror device that presents, to a driver, an image captured by a camera mounted to a vehicle.

### BACKGROUND ART

An electronic mirror device is known conventionally to display an image captured by a camera installed on the rear part of a vehicle onto an image display unit mounted on an installation position of a rearview mirror in the interior of the vehicle (see PTL 1, for example).

### Citation List

### Patent Literature

PTL 1: Unexamined Japanese Patent Publication No. H11-291817

### SUMMARY OF THE INVENTION

The present invention provides an electronic mirror device that switches a camera image to be displayed on an image display unit between an image captured by a rear camera and an image captured by a mirror camera without causing a feeling of strangeness to a driver.

The electronic mirror device according to the present invention performs display by switching between an image captured by a rear camera which is mounted on a rear part of a vehicle and captures an image of an area behind the vehicle, and an image captured by a mirror camera which is mounted near a position where a rearview mirror is mounted and captures an image of an area behind the vehicle. This electronic mirror device includes an image display unit that performs display by switching between an image captured by the rear camera and an image captured by the mirror camera, and a controller that controls the image display unit. The controller switches the display on the image display unit between the image captured by the rear camera and the image captured by the mirror camera, when an image of an object of interest captured by the rear camera coincides with an image of the object of interest captured by the mirror camera. The object of interest indicates an object that a driver is looking at during driving, such as a closest vehicle running behind the vehicle.

According to the present invention, in switching an image displayed on the image display unit, there is no change in the position and size of the object of interest displayed on the image display unit. Therefore, a camera image to be displayed on the image display unit can be switched between an image captured by the rear camera and an image captured by the mirror camera without causing a feeling of strangeness to a driver.

### BRIEF DESCRIPTION OF DRAWINGS

FIG. 1 is a front view of a vehicle interior of a vehicle including an electronic mirror device according to an exemplary embodiment of the present invention.
FIG. 2 is a schematic view illustrating an interior of the vehicle including the electronic mirror device according to the exemplary embodiment of the present invention, the vehicle being seen through from side.
FIG. 3 is a diagram illustrating a relationship between images captured by cameras in the exemplary embodiment of the present invention.
FIG. 4 is a control block diagram of the electronic mirror device according to the exemplary embodiment of the present invention.
FIG. 5 is a flowchart illustrating one example of the operation of the electronic mirror device according to the exemplary embodiment of the present invention.

### DESCRIPTION OF EMBODIMENT

Prior to the description of the exemplary embodiment of the present invention, a problem of a conventional electronic mirror device will be briefly described. In a conventional electronic mirror device, in order to present a lot of information about an environment behind the vehicle to a driver, a camera (hereinafter referred to as a rear camera) is mounted on a rear part of a vehicle so that an image in the interior of the vehicle is not captured.

Thus, according to the electronic mirror device, the driver may not correctly recognize a sense of distance due to the deviation between the installment position of an image display unit installed on a front part of the vehicle and the installment position of the rear camera installed on the rear part of the vehicle.

For example, in a case where a vehicle running on a two-lane road is going to change lane, the driver is sure to check behind the vehicle. In a case where a following vehicle running behind the vehicle is running far from the vehicle, the distance between the image display unit and the rear camera is very small with respect to the distance between the vehicle and the following vehicle running behind the vehicle. Thus, the driver hardly recognizes the difference in a sense of distance. However, in a case where the following vehicle running behind the vehicle is coming close to the vehicle, the distance between the image display unit and the rear camera increases with respect to the distance between the vehicle and the following vehicle running behind the vehicle. Thus, the driver becomes unable to correctly recognize the sense of distance.

In order to avoid the incorrect recognition of a sense of distance, another camera, which captures an image behind the vehicle from the position where the rearview mirror is mounted and displays the captured image on the image display unit, may be mounted on an installation position of the rearview mirror (hereinafter, this camera is referred to as a mirror camera). Mounting the mirror camera entails a new problem of causing a feeling of strangeness to a driver when the electronic mirror device switches the camera image to be displayed on the image display unit between an image captured by the rear camera and an image captured by the mirror camera.

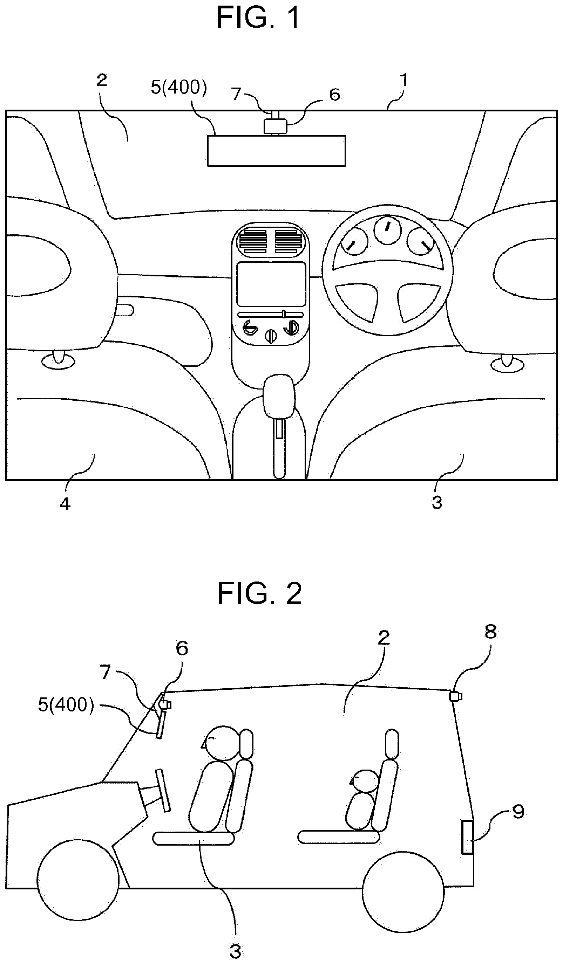

The case where the electronic mirror device according to the exemplary embodiment of the present invention is mounted to a vehicle will be described below with reference to the drawings. FIG. 1 is a front view of a vehicle interior of a vehicle including the electronic mirror device according to the exemplary embodiment. FIG. 2 is a schematic view illustrating the interior of the vehicle including the electronic mirror device according to the exemplary embodiment, as seen through from side.

As illustrated in FIGS. 1 and 2, liquid crystal display 5 which serves as an image display unit configuring electronic mirror device 400 is mounted, by use of mounting portion 7, on an installation position of a rearview mirror in front of the portion between driver seat 3 and front passenger seat 4 in vehicle interior 2 of vehicle 1.

Liquid crystal display 5 performs display by switching between an image captured by mirror camera 6 and an image captured by rear camera 8. Mirror camera 6 is mounted to mounting portion 7 above liquid crystal display 5, and captures an image behind vehicle 1. Rear camera 8 is mounted on a rear part of vehicle 1 and captures an image behind vehicle 1.

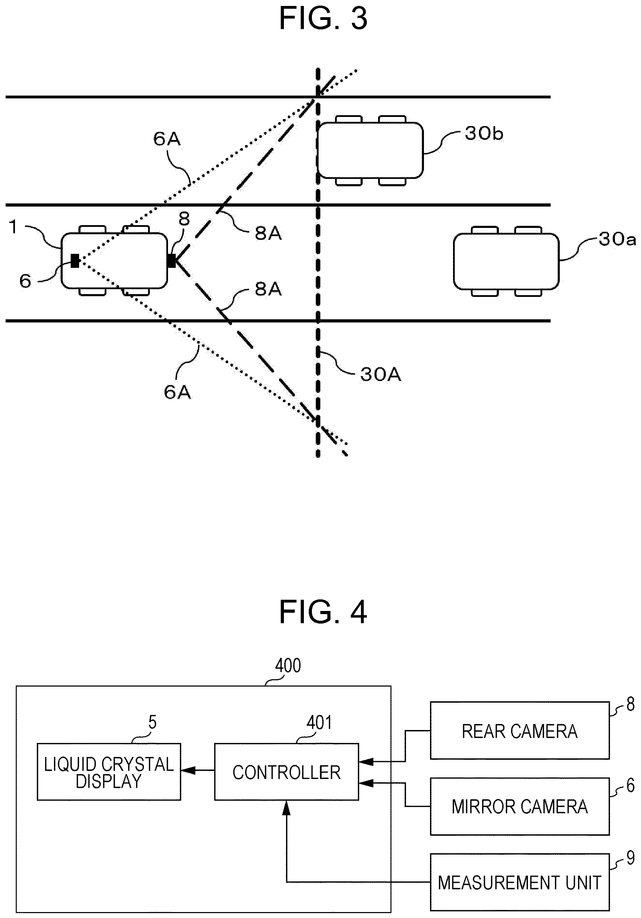

FIG. 3 is a diagram illustrating the relation between an image captured by mirror camera 6 and an image captured by rear camera 8.

Angle of view 6A indicates an angle of view of mirror camera 6. The angle of view of mirror camera 6 is set such that, when the display screen of liquid crystal display 5 is used as a rearview mirror, mirror camera 6 captures an image same as an image (mirror image) displayed on the rearview mirror.

Angle of view 8A indicates an angle of view of rear camera 8. Rear camera 8 is set to have an angle of view larger than angle of view 6A of mirror camera 6 in order to present more information to a driver compared to the rearview mirror.

Generally, in a case where the same object of interest, e.g., vehicle 30a running behind the vehicle, is captured by mirror camera 6 and rear camera 8, the position and size of vehicle 30a are different between the image captured by mirror camera 6 and the image captured by rear camera 8.

When the display on liquid crystal display 5 is switched between the image captured by mirror camera 6 and the image captured by rear camera 8, the position and size of same vehicle 30a displayed on liquid crystal display 5 change on the liquid crystal display, which causes a feeling of strangeness to the driver.

When vehicle 30b, which is the object of interest, is located on straight line 30A joining the intersections between angle of view 6A indicating the angle of view of mirror camera 6 and angle of view 8A indicating the angle of view of rear camera 8 as illustrated in FIG. 3, the position and size of vehicle 30b are the same between the image of vehicle 30b captured by mirror camera 6 and the image of vehicle 30b captured by rear camera 8.

Straight line 30A indicates the positional relation, between the vehicle and the object of interest, at which the position and size of the object of interest become the same between the image of the object of interest captured by mirror camera 6 and the image of the same object of interest captured by rear camera 8. Straight line 30A can be obtained beforehand from the installation conditions of mirror camera 6 and rear camera 8.

Electronic mirror device 400 switches a camera image displayed on liquid crystal display 5 when the vehicle and the object of interest have the positional relation described above.

FIG. 4 is a control block diagram of electronic mirror device 400. Liquid crystal display 5 is connected to controller 401. Controller 401 is connected to rear camera 8, mirror camera 6, and measurement unit 9.

Measurement unit 9 measures the positional relation between the vehicle and an object of interest at fixed time interval, and outputs the measurement result to controller 401. Measurement unit 9 is configured of a laser radar, for example.

Controller 401 includes a CPU (Central Processing Unit) controlling the operation, a ROM (Read Only Memory) that stores a control program, and a RAM (Random Access Memory) that stores temporary held data or control data. Controller 401 stores, in the ROM, the positional relation, between the vehicle and the object of interest, at which the position and size of the object of interest become the same between the image of the object of interest captured by mirror camera 6 and the image of the same object of interest captured by rear camera 8.

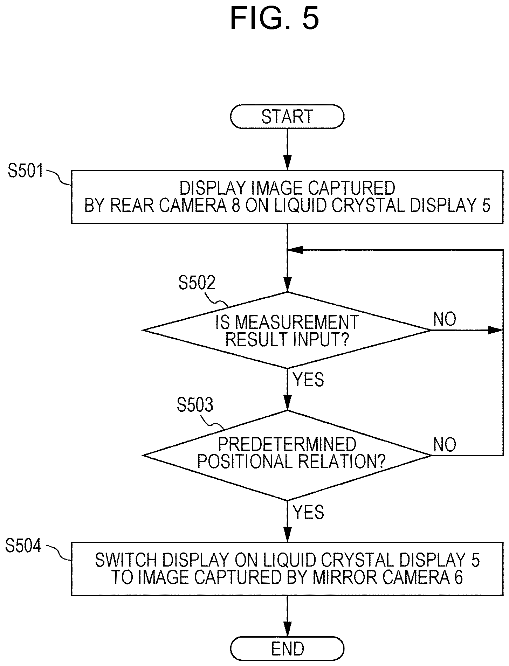

One example of the main operation of electronic mirror device 400 thus configured will be described. FIG. 5 is a flowchart illustrating one example of the main operation of electronic mirror device 400.

When the process is started, controller 401 displays an image captured by rear camera 8 on liquid crystal display 5 (step S501).

Controller 401 waits until the measurement result is input from measurement unit 9 (step S502). When the positional relation between the vehicle and the object of interest is input to controller 401 from measurement unit 9 (Yes in step S502), controller 401 determines whether or not the positional relation between the vehicle and the object of interest has the predetermined positional relation. Specifically, controller 401 determines whether or not the vehicle and the object of interest have the positional relation such that the position and size of the object of interest is the same between the image of the object of interest captured by mirror camera 6 and the image of the same object of interest captured by rear camera 8 (step S503).

When they have the predetermined positional relation (Yes in step S503), controller 401 switches the display on liquid crystal display 5 to the image captured by mirror camera 6 from the image captured by rear camera 8 (step S504), and then, ends the process.

When they do not have the predetermined positional relation (No in step S503), the process returns to step S502.

FIG. 5 illustrates the operation of controller 401 when the object of interest, which is in the state of being outside a range of the predetermined positional relation with respect to the vehicle, enters the state of being within the range of the predetermined positional relation. The state in which the object of interest is outside the range of the predetermined positional relation with respect to the vehicle indicates that the object of interest is located behind straight line 30A illustrated in FIG. 3 with respect to the vehicle. Further, the state in which the object of interest is within the range of the predetermined positional relation with respect to the vehicle indicates that the object of interest is located between straight line 30A illustrated in FIG. 3 and the vehicle (including the case in which the object of interest is located on straight line 30A).

When the object of interest which is located within the range of the predetermined positional relation with respect to the vehicle is changed to be outside the range of the predetermined positional relation, controller 401 switches the display on liquid crystal display 5 to the image captured by rear camera 8 from the image captured by mirror camera 6.

As described above, in electronic mirror device 400, when the image of the object of interest captured by rear camera 8 coincides with the image of the same object of interest captured by mirror camera 6, controller 401 switches the display on liquid crystal display 5 between the image captured by rear camera 8 and the image captured by mirror camera 6. The switching between the camera images will cause no change in the position and size of the object of interest displayed on liquid crystal display 5. Accordingly, the camera image displayed on liquid crystal display 5 can be switched from the image captured by rear camera 8 to the image captured by mirror camera 6 without causing a feeling of strangeness to a driver.

In the configuration of the present exemplary embodiment, controller 401 uses the measurement unit 9 to determine that the object of interest and the vehicle have the predetermined positional relation when the image of the object of interest captured by the rear camera coincides with the image of the same object of interest captured by the mirror camera. However, controller 401 may make the above determination by processing camera images.

For example, controller 401 stores a shape pattern of a representative object of interest, and extracts objects of interest from an image captured by rear camera 8 and an image captured by mirror camera 6 using a pattern matching. Controller 401 determines whether or not the objects of interest extracted from the images captured by the respective cameras are the same based on the time series variation in the objects of interest. When determining that the objects of interest are the same, controller 401 detects the time series variation in the area of the object of interest in the image captured by each camera. When the areas of the objects of interest in the respective images become equal to each other, controller 401 determines that the image of the object of interest captured by the rear camera coincides with the image of the object of interest captured by the mirror camera. This configuration may be applied.

In the above configuration, if the area of the object of interest in the image captured by rear camera 8 becomes equal to or larger than the area of the object of interest in the image captured by mirror camera 6, controller 401 may switch the display on liquid crystal display 5 to the image captured by mirror camera 6 from the image captured by rear camera 8. If the area of the object of interest in the image captured by mirror camera 6 is larger than the area of the object of interest in the image captured by rear camera 8, controller 401 may switch the display on liquid crystal display 5 to the image captured by rear camera 8 from the image captured by mirror camera 6.

According to this control, image may be switched without causing a feeling of strangeness to a driver based on camera images without using measurement unit 9.

In addition, although the present exemplary embodiment describes the configuration in which the display on liquid crystal display 5 is directly switched between an image captured by rear camera 8 and an image captured by mirror camera 6, the display on liquid crystal display 5 may be gradually switched.

For example, when the vehicle and an object of interest come close to the predetermined positional relation, controller 401 may generate an image obtained by calculation performed on the image captured by rear camera 8 and the image captured by mirror camera 6with respect to the weight based on the positional relation, and display the resultant image on liquid crystal display 5.

The gradual switching of the display on liquid crystal display 5 enables the change in a background image (image other than the object of interest) caused by the switching of the camera image to be smooth, so that the image can be switched without causing a feeling of strangeness to the driver.

### INDUSTRIAL APPLICABILITY

The electronic mirror device according to the present invention is useful as a vehicle-mounted monitoring device.

### REFERENCE MARKS IN THE DRAWINGS

- 1: vehicle
- 2: vehicle interior
- 3: driver seat
- 4: front passenger seat
- 5: liquid crystal display
- 6: mirror camera
- 6A, 8A: angle of view
- 7: mounting portion
- 8: rear camera
- 9: measurement unit
- 30a, 30b: vehicle
- 30A: straight line
- 400: electronic mirror device
- 401: controller

## Claims

1. An electronic mirror device that performs display by switching between an image captured by a rear camera which is mounted on a rear part of a vehicle and captures an image of an area behind the vehicle, and an image captured by a mirror camera which is mounted near a position where a rearview mirror is mounted and captures an image of an area behind the vehicle, the electronic mirror device comprising:
an image display unit that performs display by switching between an image captured by the rear camera and an image captured by the mirror camera; and
a controller that controls the image display unit,
wherein the controller switches the display on the image display unit between the image captured by the rear camera and the image captured by the mirror camera, when an image of an object of interest captured by the rear camera coincides with an image of the object of interest captured by the mirror camera.

2. The electronic mirror device according to claim 1, wherein when a positional relation between the vehicle and the object of interest input from a measurement unit, which measures a positional relation between the vehicle and the object of interest, is a predetermined positional relation, the controller determines that the image of the object of interest captured by the rear camera coincides with the image of the object of interest captured by the mirror camera.

3. The electronic mirror device according to claim 2, wherein when the positional relation between the vehicle and the object of interest is within a range of the predetermined positional relation, the controller switches the display on the image display unit to the image captured by the mirror camera from the image captured by the rear camera, and when the positional relation between the vehicle and the object of interest is outside the range of the predetermined positional relation, the controller switches the display on the image display unit to the image captured by the rear camera from the image captured by the mirror camera.

4. The electronic mirror device according to claim 1, wherein the controller determines that the image of the object of interest captured by the rear camera coincides with the image of the object of interest captured by the mirror camera, when an area of the object of interest in an entire image captured by the rear camera and an area of the object of interest in an entire image captured by the mirror camera are equal to each other.

5. The electronic mirror device according to claim 4, wherein
when the area of the object of interest in the entire image captured by the rear camera becomes equal to or larger than the area of the object of interest in the entire image captured by the mirror camera, the controller switches the display on the image display unit to the image captured by the mirror camera from the image captured by the rear camera, and
when the area of the object of interest in the entire image captured by the mirror camera becomes equal to or larger than the area of the object of interest in the entire image captured by the rear camera, the controller switches the display on the image display unit to the image captured by the rear camera from the image captured by the mirror camera.
